# EUROPEAN PATENT SPECIFICATION

(11) **EP 0 404 038 B1**
(45) Date of publication and mention of the grant of the patent: **28.12.1994**
(21) Application number: 90111497.5
(22) Date of filing: 19.06.1990
(51) Int. Cl.: B60S 5/00

(54) **Line system for maintaining and repairing car bodies**
Fliessband für Unterhalt und Reparatur von Fahrzeug-Aufbauten
Chaîne pour faire la maintenance et la réparation de carrosseries de véhicules

(30) Priority: 21.06.1989 JP 72952/89
(43) Date of publication of application: 27.12.1990
(73) Proprietor: Yamashita, Ryuzo, Funabashi-shi, Chiba-ken (JP)
(72) Inventor: Yamashita, Ryuzo, Funabashi-shi, Chiba-ken (JP)
(74) Representative: Weitzel, Wolfgang, Dr.-Ing.

(56) References cited:
- AU-A- 6 613 165
- FR-A- 796 076
- PATENT ABSTRACTS OF JAPAN vol. 8, no. 182 (M-319)(1619) 22 August 1984 & JP-A-59 075 854

## Description

### BACKGROUND OF THE INVENTION

### Field of the Invention

The present invention relates to a line system for maintaining and reparing car bodies and, more particularly, to a line system for maintaining and reparing car bodies which, with improved efficiency, can perform a series of operations such as those for correcting body frames deformed by accidents, etc. and removing parts prior to correcting said body frames as well as post-coating car bodies and post-adjusting suspension mechanisms.

### Prior Art

In order to maintain and repair cars deformed by accidents, etc., a number of operating steps are generally required, and a conveyor is essentially needed as means for conveying cars to positions at which operations are to be carried out.

As typically set forth in Japanese Utility Model Application Laid-Open No. 62-41274 specification, such a conveyor heretofore known in the art is designed such that a body holder of a body frame corrector is movable on its grooved wheels on a pair of parallel rails located above a floor, with a car held thereon.

A problem with such a conventional conveyor, however, is that as the body frame holder is moved together with the car to the next coating spot after the body frame correcting operation has been finished, it is impossible to effect the next body frame correction because of absence of the body frame holder in the body frame correcting spot.

Another problem with the prior art conveyor is that because the body frame holder with the grooved wheels is of considerable weight, its smooth movement is unachievable.

### SUMMARY OF THE INVENTION

The accomplished with the above problems in mind is the present invention which has for its object to provide a line system for maintaining and repairing car bodies, with which a car to be maintained and repaired can easily be moved to any desired operating spot on the line.

According to one aspect of the present invention, this object is attained by the provision of a line system for maintaining and repairing car bodies including at least a maintaining and repairing line comprising a pair of parallel rails extending at a given interval to a spot on which parts are removed from a car to be maintained and repaired and a pair of upper parallel rails extending at a given interval, forming means for correcting the body frame of said car; car conveyor means travelling between said rails leading to said part removing spot and said upper rails, while it carries said car in a vertically displaceable manner; and body frame corrector means for correcting the body frame of said car when said car reaches a certain position on said upper rails.

Another aspect of the present invention, there is provided a line system for maintaining and repairing car bodies, in which said body frame corrector means includes in a hole formed in a floor a body frame holder having the upper rails on its upper face, on which said car to be maintained and repaired is placed and a lift vertically moving the holder and when the bottom sides of said upper rails are flush with the upper face of said floor, said car conveyor means can travel.

The car conveyor means with the car to be maintained and repaired placed on it in a vertically displaceable manner travels on a pair of rails leading to the part-removing spot, and when the car reaches a certain position on the upper rails forming the body frame corrector means, its body frame is corrected there.

Since the body frame corrector means is of such a structure that the body frame holder needed for the body frame correcting operation and the lift vertically displaceable on the holder are housed in the floor hole, the car conveyor means can easily be moved after the bottom sides of the upper rails are made flush with the upper face of the floor following the body frame correcting operation without trouble in travelling the car conveyor means with the car placed on it.

### BRIEF DESCRIPTION OF THE DRAWINGS

The present invention will now be explained in greater detail specifically but not exclusively with reference to the accompanying drawings, in which:
Figure 1 is a side view showing one embodiment of the maintaining and repairing line system of the present invention,
Figure 2 is a side view showing the lift mover and body frame holder used in the first embodiment,
Figure 3 is a side view illustrating the cross mover used in the first embodiment,
Figure 4 is a side view showing the lift mover and its driving unit used in the first embodiment,
Figure 5 is an enlarged sectional view illustrating the layout of the lift mover and rails used in the first embodiment,
Figure 6 is an enlarged front view showing the grooved wheel of the lift mover used in the first embodiment,
Figure 7 is an enlarged plan view of the junction of rails,
Figure 8 is a plan view of the first embodiment,
Figure 9 is a side view of the crane used in the first embodiment,
Figure 10 is a front view of the crane,
Figures 11 to 13 are plan views showing another layouts of the maintaining and repairing line in the first embodiment, and
Figure 14 is a plan view showing another embodiment of the present invention.

### PREFERRED EMBODIMENTS OF THE INVENTION

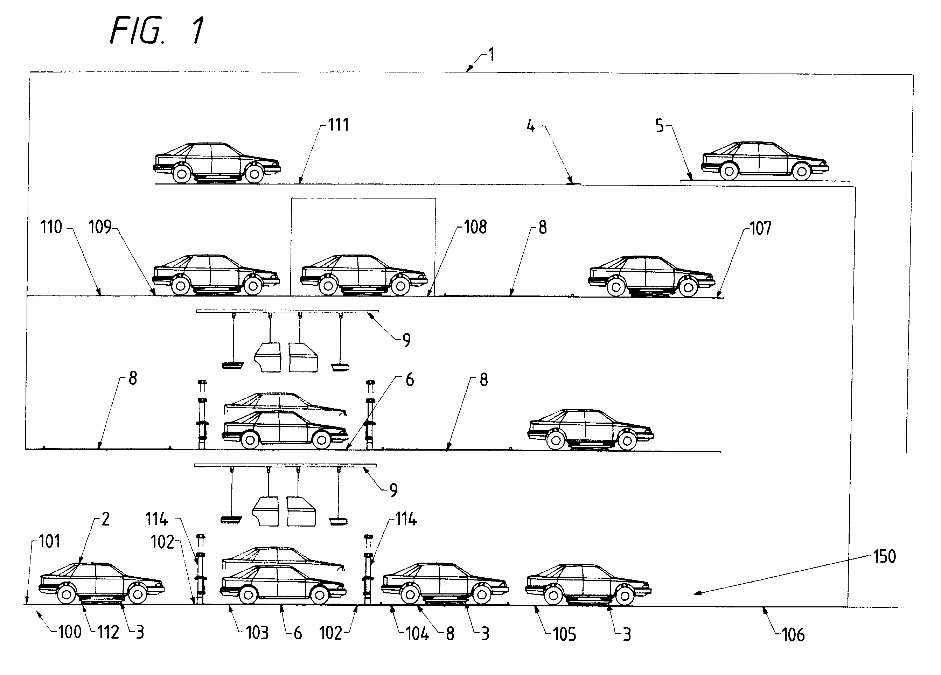

Figure 1 is a schematic view showing one embodiment of the line system for maintaining and repairing car bodies according to the present invention, generally shown at 1 and hereinafter called the line system.

The line system 1 defines a maintaining and repairing line 150 at least on a floor 100 with rails 101 comprising a pair of parallel rails extending at a given interval to a part removing spot and a pair of upper rails 103 forming body frame corrector means, as will be described later.

In the instant embodiment, the maintaining and repairing line 150 includes in addition to the above rails 101 and 103, holed/lidded rails 102 forming the body frame corrector means to be described later, connecting rails 104 forming cross conveyor means to be described later, rails 105 leading to a primer coating spot, rails terminating 106 in an elevator spot, rails 107 extending to a pre-coating spot, rails 108 extending to a coating spot, rails 109 extending to a post-coating spot, rails 110 terminating in an elevator spot and rails 111 leading to a part assembling spot.

Mountable on the rails 101 is a lift conveyor 3 with grooved wheels 112 vertically displaceable with respect to the floor 100, which serves as car conveyor means, as shown in Figure 1.

At positions of the holed/lidded rails 102 and upper rails 103, there is mounted a body frame holder 6 with a correcting tower 114, which serves as the body frame corrector means.

In Figure 1, it is noted that reference numeral 8 stands for a cross mover forming part of cross mover means to be described later, 4, a toe-in gauge and 5, a wheel gauge.

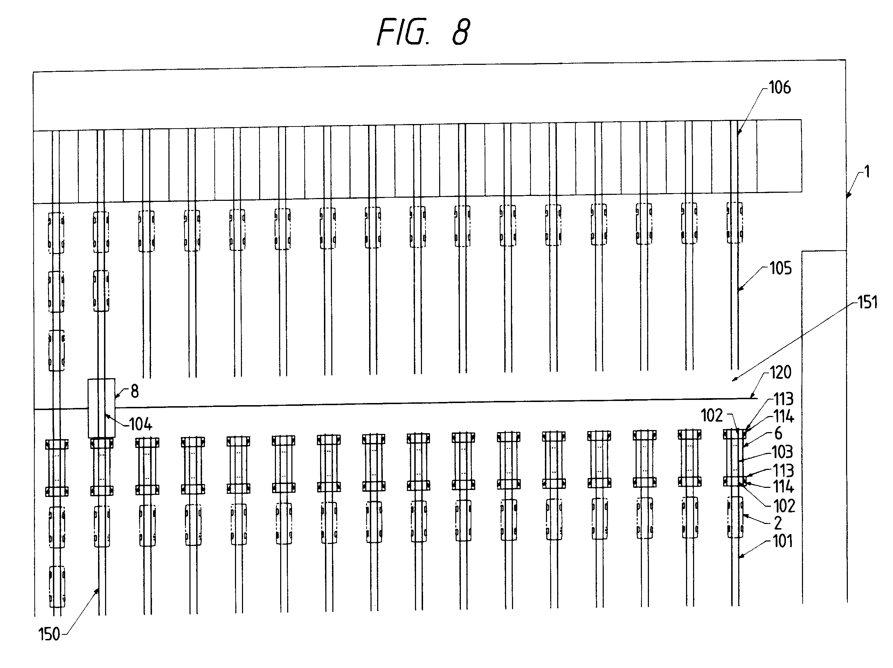

As illustrated in Figure 8, maintaining and repairing lines 150 in 16 rows are typically provided in the instant embodiment, each comprising a pair of parallel rails extending at a given interval and provided with a void space 151 of certain dimensions at a certain position.

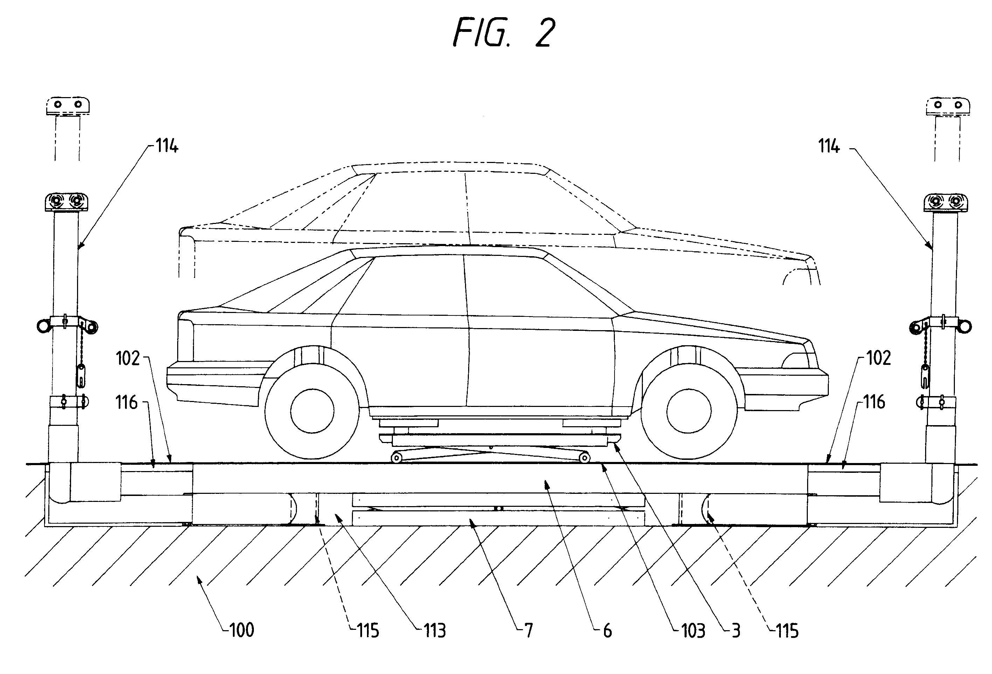

As again illustrated in Figure 8, the body frame corrector means is positioned in the vicinity of the void space 151. As illustrated in Figure 2, the body frame corrector means includes a lift 7 to be fitted into a hole 113 formed in the floor 100 and the body frame holder 6 rotatably provided on its four corners with correcting towers 114 through shafts 115.

On the upper face of the body frame holder 6, there is laid down the upper rails 103 with the provision of a lid 116 having on its upper face the holed/lidded rails 102.

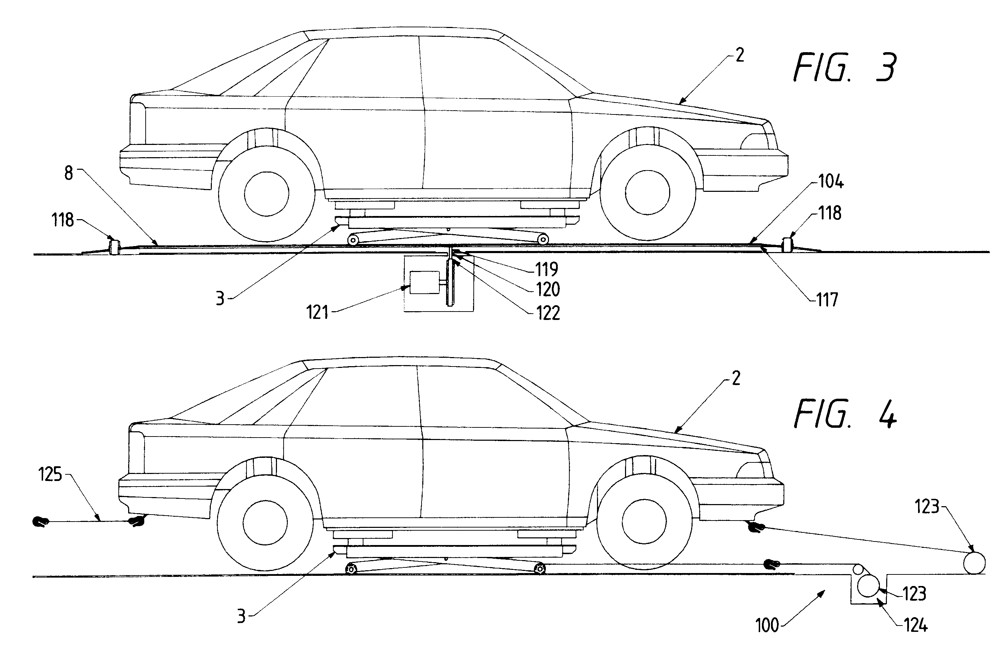

As illustrated in Figure 3, the cross mover means includes a base 117 forming the cross mover 8 positioned in the void space 151, a plurality of wheels 118 located at the ends of the base 117, the connecting rails 104 laid down on the upper face of the base 117, a downward extension 119 extending from the center of the lower side of the base 117, a groove 120 formed in the floor 100 underneath the extension 119 and crossing the connecting rails 104 at right angles, and a driving unit housed in the groove 120 and comprising a motor 121 and a chain 122.

The extension 119 engages the chain 122, so that the crossing mover 8 can be moved by the turning force of the motor 121 in the direction intersecting the direction of the maintaining and repairing line 150.

It is understood that instead of using the above driving unit, the wheels 118 may be driven directly by a motor or the mover 8 may be moved manually.

Referring to Figure 4, the car conveyor means includes a lift conveyor 3 on which a car 2 is placed in a vertically displaceable manner and a winch 123 housed in a hole 124 formed in the floor 100, said lift conveyor 3 being connected to and tracted by said winch 123 to convey a single car 2. It is understood that the provision of a connecting wire 125 to the car 2 enables a plurality of cars 2 to be tracted at the same time. As a matter of course the lift conveyor 3 is also designed to be manually operated for the purpose of greater safety.

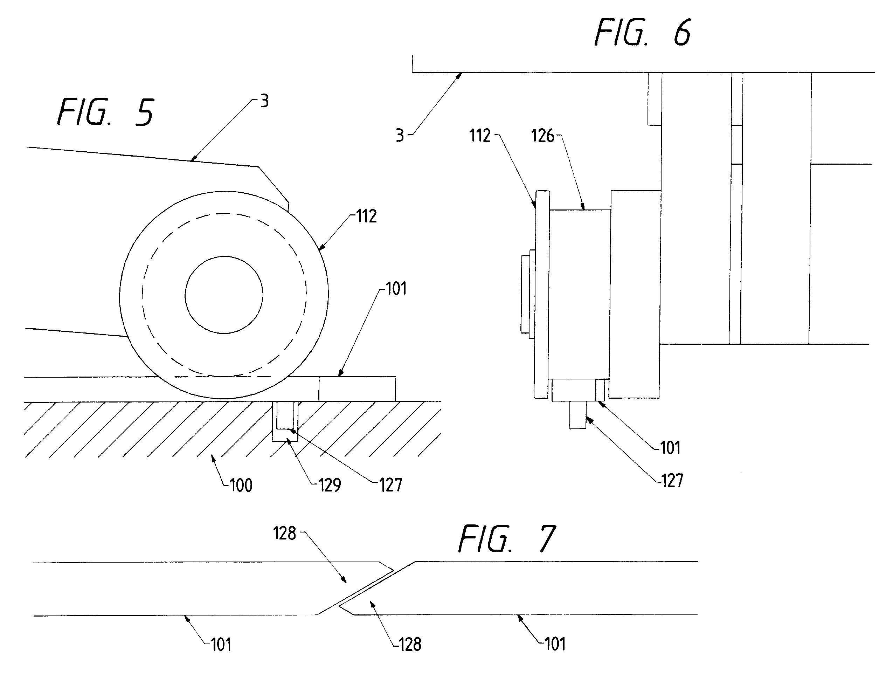

Referring to Figures 5 to 7, the structure of the lift conveyor 3 will now be explained in greater detail.

The wheel 112 of the lift conveyor 3 is provided with a groove 126, as shown in Figures 5 and 6. The grooved wheels 112 rotate with the grooves 126 coming into contact with the rails 101.

On the lower sides of the rails 101, there are provided a plurality of extension 127, which are attachable into or detachable out of a hole 129 formed in the floor 100.

As illustrated in Figure 7, the rail 101 is so inclined at its ends that even when the above hole 129 is improperly located, it can be joined to another rail 101 with no difficulty.

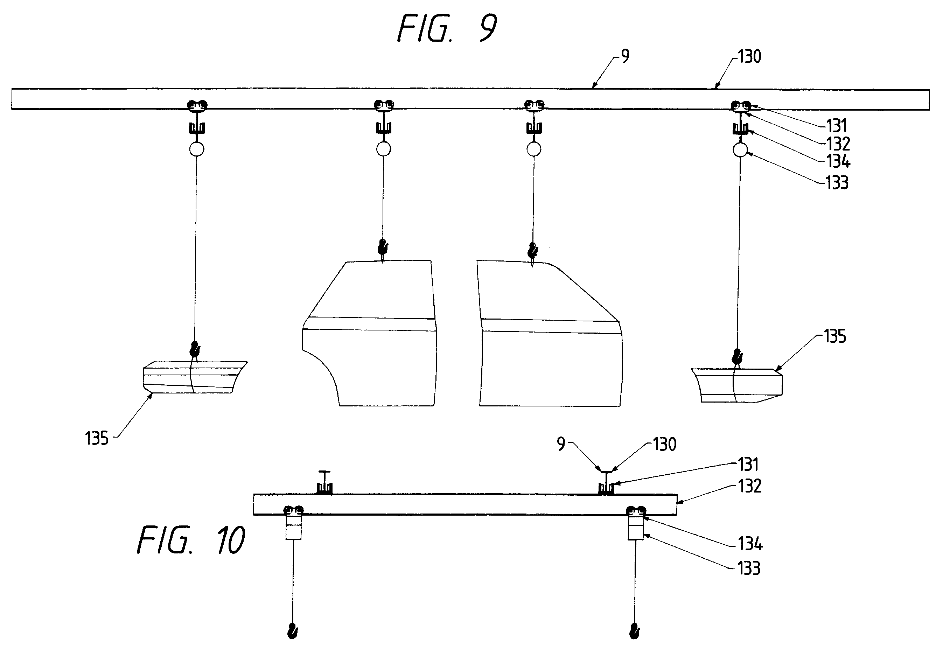

Figures 9 and 10 shows a crane 9 attached to the ceiling of the body frame corrector means.

The crane 9 includes two beams 130 attached to the ceiling and a cross beam 132 having blend trolleys 131, which intersects movably the beams 130. The cross beam 132 is movably provided with a trolley 134 having a plurality of winches 133. The winches 133 serve to temporarily hold a part 35 removed from the car 2.

The above line system 1 operates as follows.

First, the lift conveyor 3 with the car 2 to be maintained and repaired is placed on the rails 101 extending to the part removing spot, and is then tracted by the winch 123 shown in Figure 4 onto the body frame holder 6, on which it is fixed.

Various parts 135 are removed in need from the car 2 on the holder 6, and are then held temporarily by the winches 133 of the crane 9. Thus, the detachment or attachment of the parts 135 can be performed by a single worker and any separate room for storing them temporarily can be dispensed with and omission of conveying work can be achieved which increases in the working rate.

The body frame of the car 2 is then corrected by the correcting towers 114.

Even though the body correcting operation on a certain maintaining and repairing line is stagnant over, for instance, several days, then a drop in the working rate of the steps following the coating step can be avoided by feeding another car 2 on the adjacent or other line, whose body frame has already been corrected, onto the rails 105 leading to the prime coating spot with the use of the cross conveyor means.

More specifically, the lift conveyor 3 with another car 2 placed on it is transferred onto the cross mover 8 as shown in Fig. 3. After that, the base 117 is moved together with the extension 119 of the base 117 by the driven unit comprising the motor 121 and chain 122 by a given distance in the void space 151 in the direction intersecting the respective maintaining and repairing lines. Thus, line switching can be achieved without difficulty.

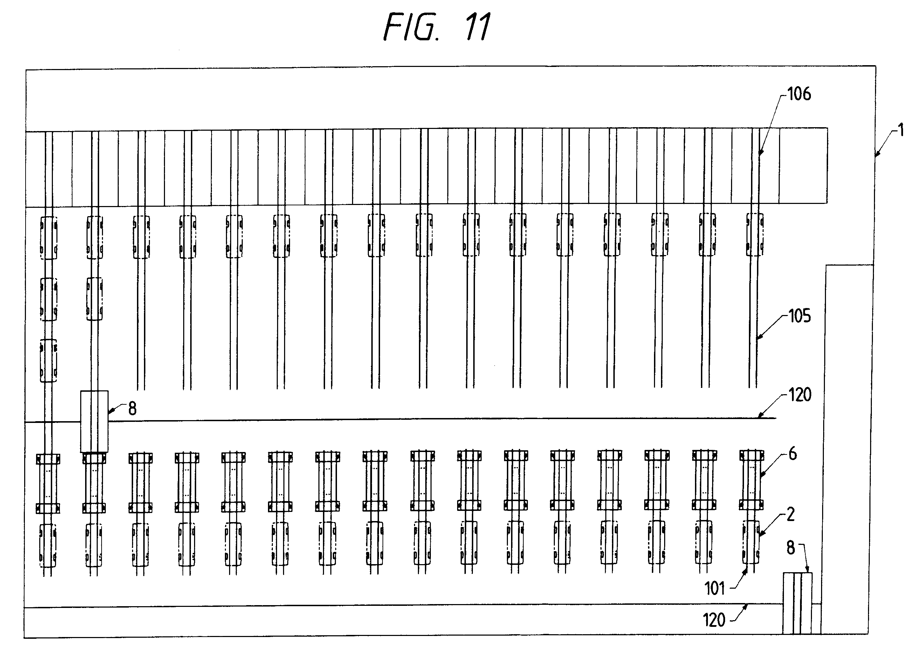

Another layouts of the maintaining and repairing lines according to the present invention will now be explained with reference to Figures 11 to 13.

In one layout shown in Figure 11, 16 rows of maintaining and repairing lines are laid down on the second floor of the line system 1 shown in Figure 1.

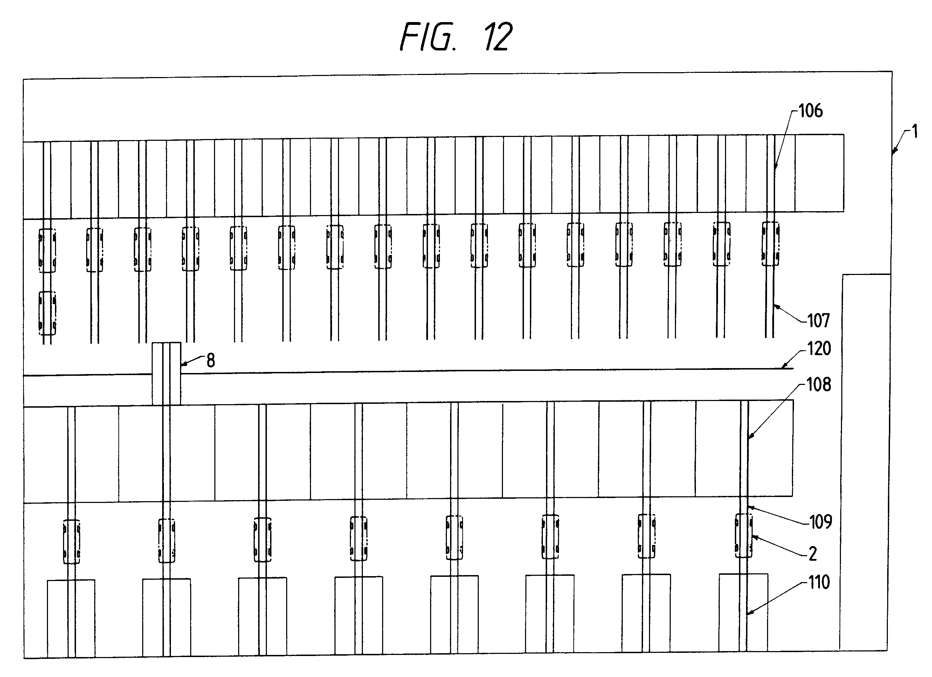

In a further layout shown in Figure 12, 16 rows of pre-coating spots and 8 rows of coating spots are provided on the third floor.

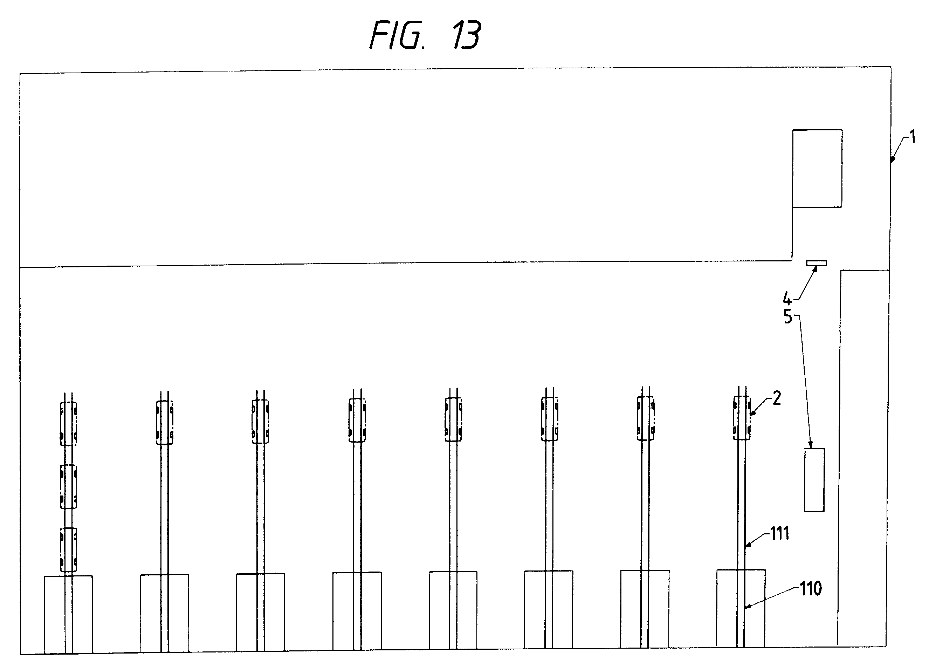

In a still further layout shown in Figure 13, 8 rows of assembling spots, the toe-in gauge 4 and the wheel gauge 5 are provided on the fourth floor.

With the maintaining and repairing lines constructed as shown in Figures 11 to 13, it is possible to perform the maintenance and repair of the cars 2 with high efficiency.

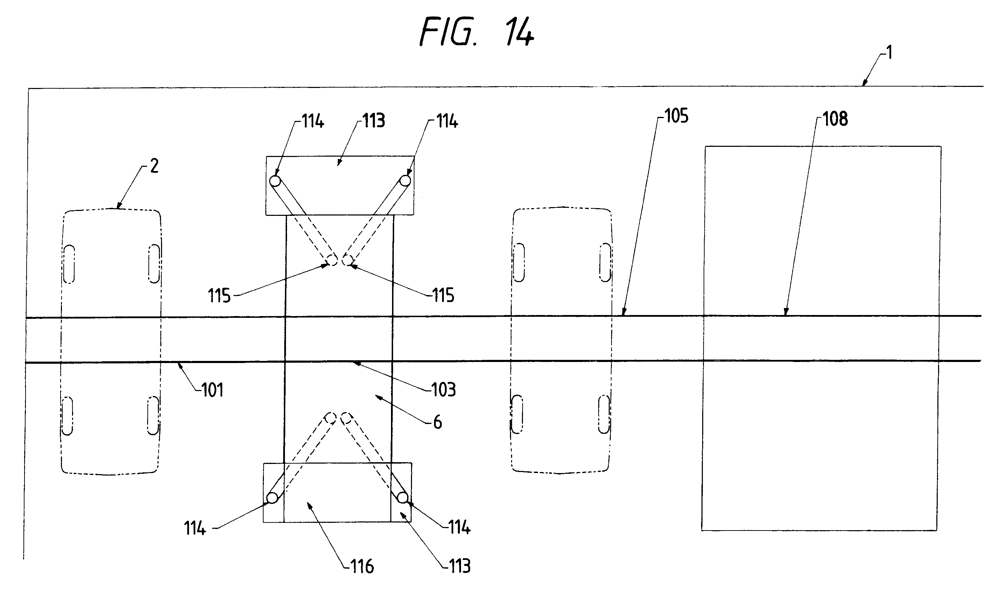

Figure 14 illustrates a further embodiment of the present invention in which the rails 101, the upper rails 103 of the body frame corrector means, the rails 105 leading to the prime coating spot and the cross mover 8 are laid down on a transverse line intersecting the already mentioned maintaining and repairing line at right angles.

The systems of the present invention enable efficient maintaining and repairing lines to be laid down in a maintenance and repair workshop on a small area.

According to the present invention as recounted above, at least the rails leading to the part removing spot and the upper rails forming the body frame corrector means are laid down on the maintaining and repairing line, and the car conveyor means with the car placed on it travels freely on the rails before and after the car body frame has been corrected. Thus the car to be maintained and repaired can be moved to any desired spot on the maintaining and repairing lines

In the embodiment shown in Figures 1 to 10, the body frame corrector means are provided on plural rows of the maintaining and repairing lines, and cars can be moved in the direction intersecting the lines by the cross conveyor means. Thus, the maintaining and repairing car bodies can be processed in a line and a car on a certain line can easily be carried to all the operating spots without having an adverse influence upon the operations of maintaining and repairing cars on other lines, so that a number of car bodies can be maintained and repaired at the same time within a short period of time.

While the present invention has been described with reference to certain specific embodiments, it is understood that various modifications and changes may be made without departing from the scope of the invention as defined in claims 1 and 2.

## Claims

1. A line system for maintaining and repairing car bodies (2) including at least a maintaining and repairing line comprising a pair of parallel rails (101, 103, 104, 105 and 106) extending at a given interval to a spot on which parts (135) are removed from a car to be maintained and repaired and a pair of upper parallel rails (103) extending at a given interval, forming means (114) for correcting the body frame of said car; car conveyor means (8) travelling between said rails leading to said part removing spot and said upper rails, while it carries said car in a vertically displaceable manner; and body frame corrector means for correcting the body frame of said car when said car reaches a certain position on said upper rails.

2. A line system for maintaining and repairing car bodies as claimed in Claim 1, in which said body frame corrector means includes in a hole (113) formed in a floor (100) a body frame holder (6) having the upper rails (103) on its upper face, on which said car to be maintained and repaired is placed and a lift (7) vertically moving the holder (6) and when the bottom sides of said upper rails (103) are flush with the upper face of said floor, said car conveyor means can travel.

## Patentansprüche

1. Fließbandsystem zum Warten und Reparieren von Wagenkarosserien (2), mit wenigstens einer Wartungs und Reparaturlinie, umfassend ein Paar von zueinander parallelen Schienen (101, 103, 104, 105 und 106), die sich in bestimmten Abständen zu einer Station erstrecken, in welcher Teile (135) von einem zu wartenden und zu reparierenden Wagen entfernt werden, und ein Paar von oberen, zueinander parallelen Schienen (103), die sich über eine bestimmte Länge erstrecken, und die Mittel (114) bilden, um den Karosserierahmen des genannten Wagens zu korrigieren; mit einem Wagenförderer, der zwischen den genannten Schienen wandert, und der zu der genannten Station zum Entfernen von Teilen und den oberen Schienen führt, während er den genannten Wagen vertikal verfahrbar trägt; und mit einem Karosserierehmen-Korrektor zum Korrigieren des Karosoerierahmens des Wagens, sobald der Wagen eine bestimmte Position auf den oberen Schienen erreicht hat.

2. Fließbandsystem zum Warten und Reparieren von Wagenkarosserien nach Anspruch 1, wobei der Karosserierahmen-Korrektor ein Loch (113) aufweist, das in einem Fußboden (100) vorgesehen ist, einen Karosserierahmenträger (6), der obere Schienen (103) auf seiner oberen Fläche aufweist, auf welche der zu wartende und zu reparierende Wagen aufgesetzt wird, und einen Lift (7), der den Träger (6) vertikal bewegt, wobei der Wagenförderer dann fördert, wenn die Böden und die oberen Schienen (103) mit der oberen Fläche des Fußbodens bündig sind.

## Revendications

1. Système de chaînes de maintenance et de réparation de carrosserie de véhicule (2) comportant au moins une chaîne de maintenance et de réparation incluant une paire de rails parallèles (101, 103, 104, 105 et 106) s'étendant selon un intervalle donné jusqu'à un point auquel dos pièces (135) sont enlevées d'une automobile pour être maintenues et réparées et une paire de rails parallèles supérieurs (103) s'étendant selon un espacement donné, formant des moyens (114) pour redresser le châssis du véhicule, des moyens de convoyage d'automobile (8) se déplaçant entre ces rails conduisent jusqu'au point d'enlèvement des pièces et jusqu'aux rails supérieurs, tout en portant le véhicule de manière à pouvoir la déplacer verticalement, et des moyens de redressement du châssis pour redresser le châssis du véhicule pendant que le véhicule atteint une certaine position sur les rails supérieurs.

2. Système de chaînes de maintenance et de réparation de carrosserie de véhicule selon la revendication 1, caractérisé en ce que les moyens de redressement du châssis comportent dans une ouverture (113) formée dans le sol (100] un moyen de maintien du châssis (6) ayant les rails supérieurs (103) sur sa face supérieure, dans lequel le véhicule à maintenir est réparé et placé, et un ascenseur (7) déplaçant verticalement le moyen de maintien (6), et lorsque les faces inférieures des rails supérieurs (103) sont de niveau avec la face supérieure du plancher, les moyens de convoyage du véhicule peuvent se déplacer.
